# EUROPÄISCHE PATENTSCHRIFT

(11) **EP 1 333 164 B1**
(45) Veröffentlichungstag und Bekanntmachung des Hinweises auf die Patenterteilung: **28.01.2004**
(21) Anmeldenummer: 02028313.1
(22) Anmeldetag: 17.12.2002
(51) Int. Cl.: F01N 7/18, F02K 1/82

(54) **Abgasanlage für Verbrennungsmotoren**
Exhaust apparatus for internal combustion engine
Dispositif d'échappement pour moteur à combustion interne

(30) Priorität: 05.02.2002 DE 10204658
(43) Veröffentlichungstag der Anmeldung: 06.08.2003
(73) Patentinhaber: J. Eberspächer GmbH & Co. KG, 73730 Esslingen (DE)
(72) Erfinder: Gaiser, Gerd, Dr., 72768 Reutlingen (DE); Zacke, Peter, Dr., 73095 Albershausen (DE)

(56) Entgegenhaltungen:
- DE-A- 4 218 198
- US-A- 4 924 968
- US-A- 6 149 053

## Beschreibung

Die Erfindung bezieht sich auf eine Abgasanlage für Verbrennungsmotoren, die mindestens eine der folgenden Komponenten aufweist:
- Rohrleitung,
- Schalldämpfer,
- katalytischer Abgasbehandler,
- Partikelfilter,
- Abgaswärmetauscher,
- Hitzeabschirmblech.

Die erfindungsgemäße Abgasanlage ist insbesondere für Verbrennungsmotoren von Kraftfahrzeugen vorgesehen. Mit Ausnahme der Rohrleitung weisen alle diese Komponenten herkömmlicherweise einen oder mehrere Blechbestandteile auf. Beim Schalldämpfer seien als typisch genannt: Gehäuse-Umfangswand und Gehäuse-Endscheiben, oder Gehäuse-Halbschalen, innere Unterteilungswände. Beim katalytischen Abgasbehandler seien als typische Beispiele genannt: einteilige oder mehrteilige Gehäusewand. Beim Partikelfilter sei als typisches Beispiel genannt: einteiliges oder mehrteiliges Gehäuse. Beim Abgaswärmetauscher sei als typisches Beispiel genannt: einteiliges oder mehrteiliges Gehäuse.

Wenn man z.B. das Gehäuse eines Schalldämpfers betrachtet, dann besteht das Gehäuse herkömmlicherweise aus Stahlblech erheblicher Wandstärke. In vielen Fällen ist es üblich, umlaufende Sicken vorzusehen, was einen Versteifungseffekt mit sich bringt.

Abgasanlagen sind hohen und vielfältigen Belastungen ausgesetzt: pulsierende Strömung des heißen Abgases, Temperaturwechsel, dynamisches Kräfte aufgrund des Befahrens unebener Fahrbahnen, Korrosionsangriff von innen und außen. Die Abgasanlage muss diesen Belastungen ohne plastische Formänderung standhalten und soll hinsichtlich Körperschallabgabe an das Fahrzeug und Schallabstrahlung an die Umgebung günstig sein.

Der Erfindung liegt das technische Problem zugrunde, eine Abgasanlage verfügbar zu machen, bei der sich ohne Einbußen beim Ertragen von Belastungen der angesprochenen Art Komponenten unter Einsatz von Blech geringerer Dikke als bisher üblich herstellen lassen.

Zur Lösung dieses Problems ist die Abgasanlage der eingangs genannten Art dadurch gekennzeichnet, dass mindestens eine der genannten Komponenten einen Blechbestandteil aufweist aus einem Blech, welches mit Einprägungen aus der Blechebene heraus versehen ist, die in Draufsicht auf die Blechebene im Wesentlichen in der Form eines Sechsecks oder eines Achtecks umgrenzt sind.

Diese speziellen Einprägungen haben einen so großen Versteifungseffekt, dass ein deutlich dünneres Blech als bisher an der betreffenden Stelle üblich eingesetzt werden kann. Daraus resultiert ein geringeres Gewicht der betreffenden Komponenten. Die Schallabstrahlung wird im Vergleich zu dem Einsatz von Blech ohne derartige Einprägungen erheblich verringert. Durch die erhöhte Biegesteifigkeit des Blechs kommt es zu geringeren Schwingungen des Blechbestandteils, was der Lebensdauer zugute kommt und die Schallabstrahlung verringert.

Die Ausdrucksweise "im Wesentlichen in der Form eines Sechsecks oder eines Achteckts" ist gewählt worden, um zum Ausdruck zu bringen, dass kleinere Abwandlungen von der strengen Sechseckform oder der strengen Achteckform im Rahmen der Erfindung möglich sind. So kann man z.B. Ecken abrunden oder gerade Linien der Umgrenzung durch leicht gekrümmte Linien ersetzen. In aller Regel wird man bei einem betrachteten Blechbestandteil entweder nur sechseckig umgrenzte Einprägungen oder nur achteckig umgrenzte Einprägungen vorsehen. Andererseits ist es aber möglich, bei ein und demselben Blechbestandteil sowohl einen Teilbereich mit sechseckig umgrenzten Einprägungen als auch einen Teilbereich mit achteckig umgrenzten Einprägungen zu haben.

Es wird betont, dass der Blechbestandteil ganzflächig oder nahezu ganzflächig mit den Einprägungen versehen sein kann, dass es aber alternativ möglich ist, nur einen Teilbereich des Blechbestandteils mit den Einprägungen zu versehen. Im letztgenannten Fall wird man am ehesten diejenigen Teilbereiche mit Einprägungen versehen, die am ehesten Versteifung und/oder Reduzierung von Schallabstrahlung nötig haben. Außerdem kommen hierbei produktionstechnische Gesichtspunkte ins Spiel, wie bei weiter unten folgenden Ausführungen noch deutlicher werden wird.

Es gibt den Fall, dass die Komponenten im Wesentlichen nur aus dem Blechbestandteil mit Einprägungen besteht. Die Fertigung eines Rohrleitungsstücks durch Biegen eines mit Einprägungen versehenen Blechs und Verschweißen mit einer Längsnaht oder mit einer Spiralnaht ist ein Beispiel hierfür. In den meisten praktischen Fällen wird die Komponente jedoch aus einem oder mehreren Blechbestandteilen mit Einprägungen, und zusätzlich einem oder mehreren Blechbestandteilen ohne Einprägungen und/oder einem oder mehreren anderen Bestandteilen bestehen. Wenn man z.B. das Gehäuse eines Schalldämpfers oder eines katalytischen Abgasbehandlers oder eines Partikelfilters oder eines Abgaswärmetauschers betrachtet, dann ist es eine gute Möglichkeit, für die Umfangs-Außenwand Blech mit Einprägungen vorzusehen, während die Endscheiben oder die Übergangstrichter oder Ähnliches aus Blech ohne Einprägungen gefertigt werden. Andererseits ist es jedoch bei der bekannten Halbschalenbauweise dieser Gehäuse alternativ möglich, für jede Halbschale einen Blechbestandteil mit Einprägungen vorzusehen.

Vorzugsweise ist der Blechbestandteil aus Blech mit Einprägungen mindestens Teil eines Schalldämpfergehäuses, mindestens Teil eines Gehäuses des katalytischen Abgasbehandlers, mindestens Teil eines Partikelfiltergehäuses oder mindestens Teil eines Abgaswärmetauschergehäuses. Darüber hinaus ist es möglich, das Blech mit Einprägungen für andere Bestandteile der Komponenten vorzusehen, z.B. innere Trennbleche des Schalldämpfers, ein Wärmetauscher-Trennblech in dem Abgaswärmetauscher etc. Im Zusammenhang mit der Komponente Rohrleitung wird darauf hingewiesen, dass man das Blech mit Einprägungen nicht nur für die Wand der Rohrleitung einsetzen kann, sondern alternativ für Einbauten der Rohrleitung, z.B. Strömungsteiler, Klappen.

Die Erfindung erlaubt beide Varianten: Die Einprägungen weisen hin zum Inneren der betreffenden Komponente, oder die Einprägungen weisen vom Inneren der Komponente weg.

Vorzugsweise sind Einprägungen in Form einer Wölbung (z.B. vergleichbar einer sehr flachen, durchgehend gewölbten Schale) vorgesehen. Eine andere bevorzugte Ausführung sind Einprägungen mit einem Boden parallel zu der Blechebene (vergleichbar etwa einer sehr flachen Schale mit schrägem Rand und ebenem Boden). Es wird betont, dass hierbei noch viele Modifikationen möglich sind, z.B. Wölbung mit kleiner Ebene in der Mitte etc.

Es können Einprägungen im Wesentlichen in der Form eines regelmäßigen Sechsecks oder Einprägungen im Wesentlichen in der Form eines regelmäßigen Achtecks vorgesehen sein. Ebenfalls bevorzugt sind Einprägungen, bei denen die Sechseckumgrenzung im Vergleich zu einem regelmäßigen Sechseck länglich ist oder die Achteckumgrenzung länglich ist.

Die vorstehenden Ausführungen zu bevorzugten Geometrien der Einprägungen sollen so verstanden werden, dass es in aller Regel bevorzugt ist, alle Einprägungen des betreffenden Blechbestandteils in der betreffenden Vorzugsgeometrie auszuführen. Andererseits gibt es Fälle, wo es praktisch oder günstig ist, nur bei einer Teilanzahl der Einprägungen die betreffende Vorzugsgeometrie zu wählen und bei anderen Einprägungen eine andere Geometrie.

Weiter vorn ist schon darauf hingewiesen worden, dass es möglich ist, nur einen Teil-Flächenbereich des Blechs mit Einprägungen zu versehen, es aber alternativ möglich ist, die Gesamtfläche oder nahezu die Gesamtfläche (z.B. mit Ausnahme eines Randbereichs) des Blechs des Blechbestandteils mit Einprägungen zu versehen. In beiden Fällen ist es bevorzugt, die Einprägungen nahe beieinander zu positionieren. "Nahe beieinander" kann einerseits bedeuten, dass die Einprägungen unmittelbar aneinander angrenzen, kann aber auch bedeuten, dass ein einprägungsfreier, in der Regel ziemlich kleiner Abstand jeweils zwischen benachbarten Einprägungen vorhanden ist. Die Ausführungen weiter unten werden noch zeigen, dass auch Mischformen zwischen diesen beiden Fällen möglich sind. Vorzugsweise nehmen die Einprägungen zusammen flächenmäßig 70 bis 100%, stärker bevorzugt 80 bis 100%, noch stärker bevorzugt 90 bis 100%, desjenigen Flächenbereichs des Blechs ein, wo Einprägungen vorgesehen sind. Vorzugsweise sind die Einprägungen nach Größe, Form und Positionierung derart vorgesehen, dass mindestens bei einem Teil der Nachbarschaftsstellen zwischen zwei benachbarten Einprägungen ein uneingeprägter Steg vorhanden ist. Vorzugsweise ist jeweils ein uneingeprägter Steg bei einem überwiegenden Teil der Nachbarschaftsstellen vorhanden. Eine weitere bevorzugte Alternative besteht darin, dass jeweils ein uneingeprägter Steg bei allen Nachbarschaftsstellen vorhanden ist.

Vorzugsweise sind die Einprägungen in Reihen angeordnet, wobei in jeder Reihe die Einprägungen um eine halbe Teilungsbreite gegenüber den Einprägungen in der Nachbarreihe versetzt sind und wobei in jeder Reihe die Einprägungen mit einem Teilbereich in Rücksprünge der Nachbarreihe ragen. Anschauliche Beispiele für diese Ausbildung folgen weiter unten.

Weiterer Gegenstand der Erfindung sind ein Schalldämpfer oder ein katalytischer Abgasbehandler oder ein Partikelfilter oder ein Abgawärmetauscher, alles für eine Abgasanlage für Verbrennungsmotoren, dadurch gekennzeichnet, dass sein Gehäuse mindestens zum Teil aus einem Blech besteht, das mit Einprägungen gemäß den Ausführungen in der vorliegenden Anmeldung versehen ist. Alle Ausführungen in dieser Anmeldung zu bevorzugten Ausbildungen der Abgasanlage gelten analog auch für diese Komponenten für sich.

Weiterer Gegenstand der Erfindung sind Verfahren zur Herstellung einer Komponente einer Abgasanlage für Verbrennungsmotoren, vorzugsweise einer Rohrleitung, eines Schalldämpfer, eines katalytischen Abgasbehandlers, eines Partikelfilters, eines Abgaswärmetauschers, eines Hitzeabschirmblechs.

Ein erstes bevorzugtes Verfahren ist dadurch gekennzeichnet,
(a) dass ein Blech - vor oder nach dem Abtrennen von einem größeren Blech - mit Einprägungen gemäß den Ausführungen in der vorliegenden Anmeldung versehen wird;
(b) dass - in einem eigenen Schritt oder inkorporiert in Schritt (c) - das Blech so verformt wird, dass es die Form eines Blechbestandteils der Komponenten hat;
(c) und dass aus diesem Blechbestandteil allein oder aus diesem Blechbestandteil zusammen mit mindestens einem weiteren Bestandteil unter Einsatz einer Fügetechnik (z.B. Umfalznaht, Schweißnaht) die Komponente produziert wird.

Besonderes Charakteristikum dieses ersten Verfahrens ist es, dass von einem vorher mit Einprägungen versehenen Blech ausgegangen wird und dieses Blech dann weiter verarbeitet wird bis hin zur fertigen Komponente. Bei dem ersten Verfahren ist bevorzugt, die Einprägungen durch Prägestempel oder durch Walzen mit entsprechender Walzflächengestaltung zu erzeugen, Letzteres am praktischsten vor dem Abtrennen des Blechs für einen betrachteten Bestandteil der Komponente von einem Blechband.

Als typisches Beispiel wird die Herstellung eines katalytischen Abgasbehandlers betrachtet. Ein Blechband, welches durch Prägewalzen durchgehend mit Einprägungen versehen worden ist, wird um einen Keramikmonolithen, der Längskanäle hat und katalytisch beschichtet ist, herumgelegt, dabei entsprechend der Umfangskrümmung des Monolithen gebogen, dann (oder schon vor dem Herumlege-Biegen) von dem Blechband abgetrennt, dann an einer Längs-Falznaht geschlossen. Dann können Zuströmtrichter und Abströmtrichter aus nicht mit Einprägungen versehenem Blech angeschweißt werden. Dies war ein Beispiel dafür, dass der Schritt (b) inkorporiert in Schritt (c) ablaufen kann.

Als ein weiteres Beispiel wird die Herstellung eines Schalldämpfers beschrieben. Zunächst wird von einem Blechband ein Blech der erforderlichen Größe abgeschnitten und dann in einem mittleren Teilbereich (d.h. Streifen erheblicher Breite an den Querenden und an den Längsenden frei lassend) mit Einprägungen versehen. Hieraus wird, Schritt (b), eine Halbschale des Schalldämpfergehäuses durch Tiefziehen hergestellt. Schließlich werden, nach Einlegen des "Innenlebens" des Schalldämpfers, zwei Halbschalen und dieses Innenleben zu der Komponente vereinigt durch Längsschweißnähte an den Halbschalenrändern, Schritt (c).

Die Herstellung einer Komponente allein aus dem mit Einprägungen versehenen Bestandteil ist ein eher seltener Fall, aber z.B. für Rohrleitungsstücke oder Hitzeabschirmbleche möglich.

Ein zweites bevorzugtes Verfahren ist dadurch gekennzeichnet,
(h) dass ein Blech - vor oder nach dem Abtrennen von einem größeren Blech - so verformt wird, dass es die Form eines Blechbestandteils der Komponente hat und mit Einprägungen gemäß den Ausführungen in der vorliegenden Anmeldung versehen wird;
(b) und dass aus diesem Blechbestandteil allein oder aus diesem Blechbestandteil zusammen mit mindestens einem weiteren Bestandteil unter Einsatz einer Fügetechnik die Komponente produziert wird.

Der grundlegende Unterschied zwischen dem zweiten und dem ersten Verfahren besteht darin, dass bei dem zweiten Verfahren die Einprägungen zugleich mit einem auch anderweitig erforderlichen Verformungsschritt erzeugt werden. Als ein Beispiel sei das Tiefziehen einer Gehäuse-Halbschale genannt in der Weise, dass das Tiefziehwerkzeug so geformt ist, dass es beim Tiefziehen gleich die Einprägungen miterzeugt. Dies geht am unproblematischsten, wenn die Einprägungen im Bodenbereich der Halbschale vorgesehen sind, aber nicht in den seitlichen Bereichen, die hinauf zum Rand der Halbschale führen.

Die erfindungsgemäßen Verfahren können mit Einprägungen arbeiten, die in Draufsicht auf die Blechebene im Wesentlichen in der Form eines Sechsecks oder eines Achtecks umgrenzt sind, wie am Anfang der Anmeldung bei der Lösung des der Erfindung zugrunde liegenden Problems beschrieben. Die Einprägungen können aber auch eines oder mehrere der Vorzugsmerkmale aufweisen, die in der vorliegenden Anmeldung offenbart sind.

Es wird betont, dass der Blechbestandteil zusätzlich zu den Einprägungen auch Sicken aufweisen kann. Die erfindungsgemäßen Einprägungen haben außerdem den Effekt, dass sich der Blechbestandteil bei Erwärmung weniger stark ausdehnt, weil ein Teil der Wärmedehnung "intern" durch stärkeres Auswölben der Einprägungen aufgenommen wird. Bei Einbausituationen mit allseitiger Einspannung verringern sich deshalb die Wärmespannungen.

Insbesondere bei Gehäusen mit katalytischen Abgasbehandlern hat die beschriebene geringere Wärmedehnung des Blechbestandteils den folgenden günstigen Effekt: Die Durchmesseraufweitung durch Temperaturerhöhung ist weniger stark, und deshalb wird die Flächenpressung der Lagerungsmatte zwischen dem Katalysatorkörper und dem Gehäuse weniger stark reduziert als bei nicht-erfindungsgemäßem Blechbestanteil; die Halterungskraft auf den Katalysatorkörper bleibt höher. Wenn man mit nach innen weisenden Einprägungen arbeitet, kommt die stärkere Auswölbung der Einprägungen bei Temperaturerhöhung hinzu. Bei geeigneter Auslegung kann hiermit sogar die Aufweitung des Durchmessers kompensiert werden. Ein weiterer Vorteil ist die Elastizität des mit Einprägungen versehenen Blechbestandteils. Bei richtiger Dimensionierung kann man eine elastische Lagerung des Katalysatorkörpers mit vordefinierten Kräften erzielen, bei der der Blechbestandteil mindestens einen erheblichen Teil der Elastizität der Lagerung erbringt.

Das für Gehäuse von katalytischen Abgasbehandlern Beschriebene gilt analog auch für Gehäuse von Partikelfiltern.

Erfindungsgemäße Blechbestandteile mit Einprägungen haben einen besseren Wärmeübergang als Bleche ohne Einprägungen, weil der Strömung entlang dem Blechbestandteil Bewegungskomponenten auf das Blech zu und von dem Blech weg überlagert werden. Dieser Effekt macht den Blechbestandteil besonders gut geeignet für die Wärmedurchtrittswand des Wärmetauschers. Es gibt außerdem Fälle, bei denen der verbesserte Wärmeübergang willkommen ist, um lokal mehr Wärme durch eine Wand von der Abgasanlage an die Umgebungsluft abzugeben.

Außerdem wurde festgestellt, dass - besonders ausgeprägt auf der Seite, auf der die Einprägungen vertieft sind - die Strömung entlang dem mit Einprägungen versehenen Blechbestandteil mit geringerem Druckverlust und verbessertem Strömungsverhalten strömt. Dieser Effekt ist bekannt von der Umströmung von Golfbällen.

Die Erfindung und vorteilhafte Ausgestaltungen der Erfindung werden nachfolgend an zeichnerisch dargestellten Ausführungsbeispielen näher erläutert. Es zeigt:
Fig. 1 in schematisierter Darstellung eine Abgasanlage in Draufsicht von oben;
Fig. 2 einen Ausschnitt eines mit Einprägungen versehenen Blechs in Draufsicht;
Fig. 3 einen Schnitt längs III-III in Fig. 2;
Fig. 4 in einem Schnitt analog dem Schnitt von Fig. 3 eine alternative Ausführungsform des Blechs;
Fig. 5 einen Ausschnitt eines mit Einprägungen versehenen Blechs anderer Ausführungsform in Draufsicht;
Fig. 6 einen Ausschnitt eines mit Einprägungen versehenen Blechs anderer Ausführungsform in Draufsicht;
Fig. 7 einen Ausschnitt eines mit Einprägungen versehenen Blechs anderer Ausführungsform in Draufsicht;
Fig. 8 einen Schnitt längs VIII-VIII in Fig. 5;
Fig. 9 einen Ausschnitt eines mit Einprägungen versehenen Blechs anderer Ausführungsform in Draufsicht;
Fig. 10 einen Ausschnitt eines mit Einprägungen versehenen Blechs anderer Ausführungsform in Draufsicht;
Fig. 11 einen Ausschnitt eines mit Einprägungen versehenen Blechs anderer Ausführungsform in Draufsicht;
Fig. 12 einen Ausschnitt eines mit Einprägungen versehenen Blechs anderer Ausführungsform in Draufsicht;
Fig. 13 einen Querschnitt längs XIII-XIII in Fig. 1;
Fig. 14 einen Querschnitt längs XIV-XIV in Fig. 1.

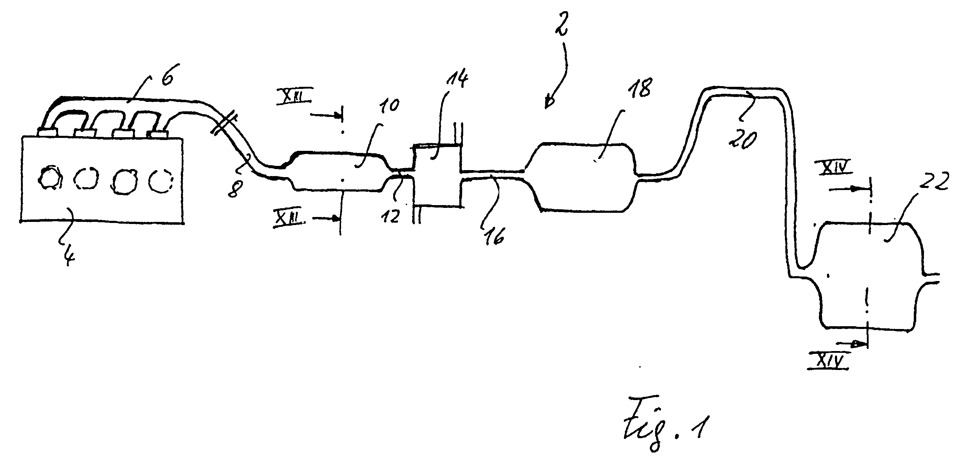

In Fig. 1 ist eine Abgasanlage 2 für einen Antriebs-Verbrennungsmotor 4 eines ansonsten nicht gezeichneten Kraftfahrzeugs schematisiert gezeichnet. Die zeichnerische Darstellung der Abgasanlage 2 ist in Draufsicht bei einbaugemäßer Positionierung.

Die gezeichnete Abgasanlage 2 besteht - von strömungsaufwärts nach strömungsabwärts fortschreitend - im Wesentlichen aus einem Krümmer 6, einem Rohrleitungsabschnitt 8, einem katalytischen Abgasbehandler 10, einem Rohrleitungsabschnitt 12, einem Abgaswärmetauscher 14, einem Rohrleitungsabschnitt 16, einem Mittelschalldämpfer 18, einem gebogen verlaufenden Rohrleitungsabschnitt 20 und einem Endschalldämpfer 22. Der Krümmer 6 wird beim Einbau der Abgasanlage an den Zylinderkopf des Verbrennungsmotors 4 angeschraubt; er führt die Abgasströme von vier Zylindern in ein gemeinsames Rohr zusammen. Der Rohrleitungsabschnitt 20 führt um die Hinterachse des Fahrzeugs herum.

Der katalytische Abgasbehandler 10 besitzt ein Gehäuse, in dem ein Keramikkörper mit einer Vielzahl von Längskanälen gehaltert ist. Die Wände der Längskanäle sind mit einer Schicht beschichtet, die im Wesentlichen aus einem Katalysatorträgermaterial und dem eigentlichen Katalysatormaterial besteht.

Alternativ zu dem katalytischen Abgasbehandler 10 kann man sich an dieser Stelle der Abgasanlage 2 einen Partikelfilter vorstellen, wenn z.B. der Verbrennungsmotor 4 ein Dieselmotor ist. Ein Partikelfilter besitzt z.B. ein Gehäuse und einen darin gehalterten Filterkörper. Der Filterkörper kann z.B. als Keramikkörper mit Längskanälen ausgeführt sein, wobei die Hälfte der Längskanäle eingangsseitig offen und ausgangsseitig geschlossen ist und die andere Hälfte der Längskanäle an der Eintrittsseite des Gehäuses geschlossen und an der Austrittsseite des Gehäuses offen ist.

Der Abgaswärmetauscher 14 hat ein Gehäuse und im Inneren des Gehäuses eine z.B. zylindrische Wärmetauschwand. Der Wärmetauscher 14 kann z.B. dazu dienen, Warmluft zu Heizzwecken durch Wärmetausch mit dem Abgasstrom zu erzeugen.

Der Mittelschalldämpfer 18 hat ein Gehäuse und ein darin gehaltertes "Innenleben" zur Schalldämpfung. Das Gleiche gilt für den Endschalldämpfer 22.

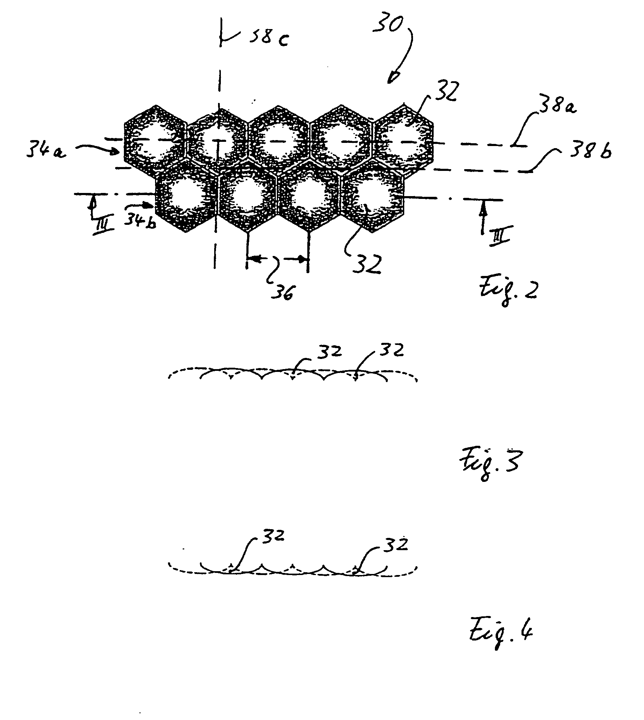

Den nachfolgend genauer zu beschreibenden Blechbestandteil kann man sich insbesondere vorstellen als Umfangswand des Gehäuses des katalytischen Abgasbehandlers 10, als Umfangswand des Gehäuses des beschriebenen Partikelfilters, als Umfangswand des Gehäuses des Wärmetauschers 14, als Umfangswand des Gehäuses des Mittelschalldämpfers 18, als Umfangswand des Gehäuses des Endschalldämpfers 22. Außerdem kann man insbesondere den Blechbestandteil zur Herstellung eines Hitzeabschirmblechs (siehe Fig. 13) oder zur Herstellung eines Rohrleitungsabschnitts benutzen. In den Figuren 2 bis 12 ist gleichsam als Vorstufe des Blechbestandteils ein ebenes Blech mit Einprägungen gezeichnet. Das in Fig. 2 als Ausschnitt gezeichnete Blech 30 weist Einprägungen 32 auf, die in der Form eines regelmäßigen Sechsecks umgrenzt sind. Der Schnitt der Fig. 3 zeigt, dass die Einprägungen in Richtung nach oben aus der Zeichnungsebene heraus ausgeführt sind. Fig. 4 veranschaulicht, dass auch die umgekehrte Ausbildung möglich ist, also Einprägungen 32 nach unten aus der Zeichnungsebene heraus. Die Figuren 3 und 4 zeigen auch, dass die Einprägungen 32 bei dem gezeichneten Ausführungsbeispiel die Form einer flachen Wölbung haben, wobei der Wölbungsradius im Bereich der Einprägungsränder wesentlich kleiner wird.

Die Einprägungen 32 sind in Reihen 34a, 34b etc. angeordnet. In der Reihe 34b sind die Einprägungen 32 um eine halbe Teilungsbreite 36 gegenüber den Einprägungen 32 in der Nachbarreihe 34a versetzt. Die Einprägungen 32 der Reihe 34b ragen jeweils mit einem Teilbereich in Rücksprünge der Reihe 34a, so dass eine Bienenwabenstruktur mit Einprägungen 32 dicht an dicht entsteht. Der beschriebene Versatz von Reihe zu Reihe und das beschriebene Vorragen in Rücksprünge der Nachbarreihe setzt sich von Reihe zu Reihe in dem Blech 30 fort.

Die Figuren 3 und 4 zeigen ferner, dass bei diesem Ausführungsbeispiel die Einprägungen 32 unmittelbar benachbart sind. Jede Sechseckseite, die gleichsam zwei benachbarten Einprägungen 32 gemeinsam ist, wird durch eine ziemlich scharfe Biegekante gebildet.

Man sieht bei Betrachtung von Fig. 2, dass man in der Zeichnungsebene keine Linie ("Biegelinie") einzeichnen kann, um die der Blechbestandteil 30 gebogen werden könnte, ohne auch Einprägungen 32 mit zu verformen. Eine erste eingezeichnete Biegelinie 38a ist eine Biegelinie, bei welcher dem Biegen der maximale Biegewiderstand entgegengesetzt wird. Bei einer zweiten eingezeichneten Biegelinie 38b ist der Biegewiderstand geringer, aber es müssen immer noch Bereiche der Einprägungen 32 gebogen werden, die außerhalb der ursprünglichen Blechebene, d.h. vor der Erzeugung der Einprägungen 32, liegen. Eine dritte eingezeichnete Biegelinie 38c, die rechtwinklig zu den Biegelinien 38a und 38b verläuft, zeigt, dass auch beim Biegen um diese Biegelinie 38c Einprägungen 32 gebogen werden müssen. Dies gilt auch für alle schräg verlaufenden Biegelinien.

Aus dem Beschriebenen resultiert, dass das gezeichnete Blech 30 hinsichtlich jeder denkbaren Biegelinie 38 einen erheblich größeren Biegewiderstand besitzt als ein entsprechendes Blech ohne die Einprägungen 32. Wenn gleicher Biegewiderstand wie bei einem Blech ohne Einprägungen 32 das Ziel ist, kann ein Blech mit erheblich verringerter Dicke eingesetzt werden.

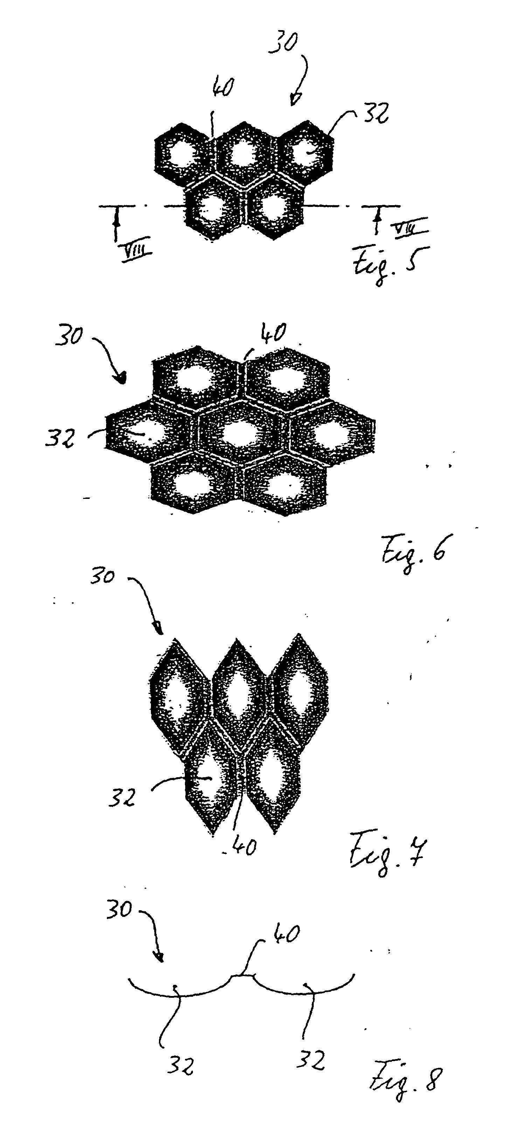

Die Ausführungsform gemäß Fig. 5 unterscheidet sich von der Ausführungsform gemäß Fig. 2 dadurch, dass zwischen den Einprägungen 32 Stege 40 in Form schmaler Streifen vorhanden sind. Die Stege 40 befinden sich in der Ebene des Blechs vor der Erzeugung der Einprägung 32. Der Schnitt der Fig. 8 zeigt den Steg 40 besonders deutlich und veranschaulicht, dass die Kante am Rand jeder Einprägung 32 weniger scharf ausgeprägt ist als bei Ausführungsformen ohne Steg 40 (siehe Figuren 3 und 4).

Generell kann man sagen, dass Ausführungsformen mit Steg 40 zwischen benachbarten Einprägungen 32 herstellungsgünstiger sind, und zwar sowohl für die Erzeugung der Einprägungen 32 als auch für die nachfolgende Verformung des Blechs 30 zu einem Bestandteil einer Abgasanlagenkomponente.

Die Figuren 6 und 7 zeigen, dass man alternativ mit sechseckig umgrenzten Einprägungen 32 arbeiten kann, die im Vergleich zu regelmäßigen Sechsecken länglich sind.

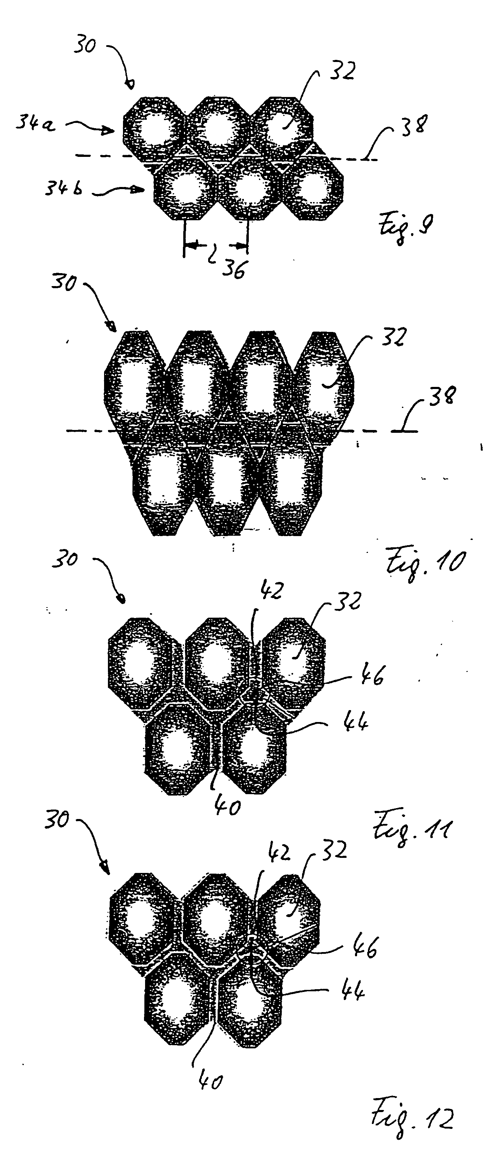

Fig. 9 zeigt ein Blech 30 mit Einprägungen 32, die in der Form eines regelmäßigen Achtecks umgrenzt sind. Auch hier sind bei benachbarten Reihen 34a und 34b die Einprägungen 32 um eine halbe Teilungsbreite 36 gegeneinander versetzt und ragen die Einprägungen 32 der Reihe 34b mit einem Teilbereich in Rücksprünge der Nachbarreihe 34a hinein. Man sieht ferner, dass es bei achtecktig umgrenzten Einprägungen 32 nicht möglich ist, die Blechfläche lückenlos mit Einprägungen 32 zu überziehen. Zwischen den Reihen 34 bleiben kleine dreieckige Bereiche stehen, die in der ursprünglichen Blechebene liegen.

Die eingezeichnete Biegelinie 38 ist diejenige Biegelinie, um die das Blech 30 den relativ geringsten Biegewiderstand hat. Man sieht, dass beim Biegen um die Biegelinie 38 nur Randbereiche der Einprägungen 32 mitverformt werden müssen.

Diese Verhältnisse verbessern sich wesentlich, wenn man, wie bei der Ausführungsform gemäß Fig. 10, mit länglichen Achteck-Umgrenzungen arbeitet. Jetzt ist selbst die eingezeichnete Biegelinie 38 deutlich günstiger als bei der Ausführungsform gemäß Fig. 9.

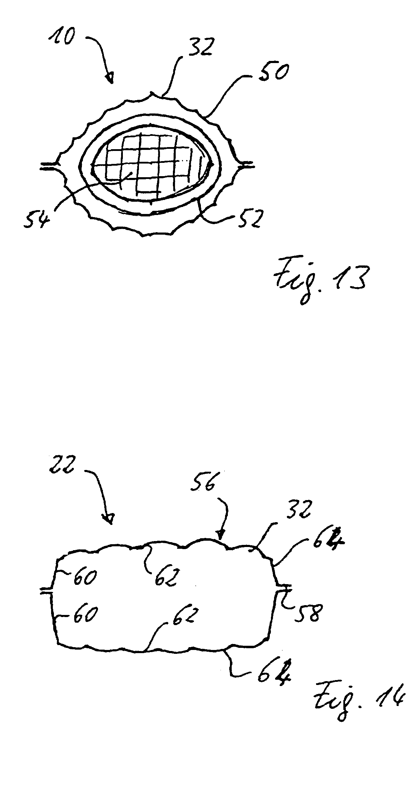

Die Figuren 11 und 12 zeigen Ausführungsformen, bei denen zwischen achtekkig umgrenzten Einprägungen 32 Stege 40 analog Figuren 5 bis 8 vorhanden sind. Mit dem eingekreisten Bereich 42 soll veranschaulicht werden, dass man es in der Hand hat, die waagerechten Kanten 44 der Achtecke wahlweise etwas länger (Fig. 11) oder etwas kürzer (Fig. 12) zu machen. Im Fall der Fig. 11 ergibt sich ein Stegbereich 46 an dem Y-förmigen Zusammentreffen von drei Stegen 40, der flächengrößer als im Fall der Fig. 12 ist. Das Blech 30 der Fig. 11 kann mit geringerer Materialbeanspruchung mit den Einprägungen 32 versehen werden. Andererseits liefert die Ausführungsform der Fig. 12 ein mit Einprägungen 32 versehenes Blech 30, welches einen etwas höheren Biegewiderstand hat. Man kann also durch Variierung der Länge der Kante 44 das Blech auf bestimmte Fälle hin optimieren.

Es wird betont, dass - wie im Zusammenhang mit Figuren 2 bis 4 beschrieben - bei allen Ausführungsformen die Einprägungen 32 wahlweise "nach oben" oder "nach unten" eingeprägt sein können. Beide Ausführungsformen unterscheiden sich selbstverständlich nicht, wenn man das Blech um 180° wendet. Eine Bedeutung hat der Unterschied allerdings, wenn das Blech 30 als insgesamt gebogener (oder auch als insgesamt nicht weiter gebogener, z.B. Endscheibe eines Schalldämpfers) Blechbestandteil einer Abgasanlagenkomponente vorgesehen ist. Hier können die Einprägungen entweder "nach außen weisen" oder "nach innen weisen", z.B. zum Inneren der Rohrleitung oder des Gehäuses des katalytischen Abgasbehandlers, des Partikelfilters, des Abgaswärmetauschers oder des Schalldämpfers hin. Insbesondere im Hinblick auf günstige Strömungsverhältnisse kann es aber auch vorteilhaft sein, einige der Einprägungen "nach oben" und andere "nach unten" einzuprägen.

Fig. 13 zeigt einen katalytischen Abgasbehandler 10 im Querschnitt, der mit einem Hitzeabschirmblech 50 versehen ist. Man erkennt das im Querschnitt in etwa elliptische Gehäuse 52, den darin gehalterten Katalysatorkörper 54 und das aus zwei Halbschalen zusammengesetzte, außen herum angeordnete Hitzeabschirmblech 50. Vor und hinter der Zeichnungsebene der Fig. 13 ist das Hitzeabschirmblech hinter den Enden des Abgasbehandlers 10 an der Rohrleitung 8 bzw. 10 festgelegt. Das Hitzeabschirmblech 50 kann aus mit Einprägungen 32 versehenem Blech 30 bestehen.

Wie bereits weiter vorne ausgeführt, existieren zwei unterschiedliche Fertigungsabläufe. Bei einer ersten Art von Fertigungsablauf wird das Ausgangsblech zunächst mit Einprägungen 32 versehen, und dieses Blech 30 wird dann für die herzustellende Komponente weiterverarbeitet, was häufig ein Biegen erfordert, wie man z.B. bei dem Hitzeabschirmblech 50 der Fig. 13 gesehen hat. Bei einer zweiten Art von Fertigungsablauf prägt man die Einprägungen 32 mit, wenn ein Blechbestandteil der betreffenden Abgasanlagenkomponente sowieso verformt werden muss, z.B. durch Tiefziehen. Fig. 14 veranschaulicht einen Fall, bei dem dies eine gute Möglichkeit ist.

Fig. 14 zeigt ein Gehäuse 56 eines Endschalldämpfers 22 im Querschnitt. Das Gehäuse 56 ist in Halbschalenbauweise ausgeführt. Die zwei Halbschalen 64 werden nach dem Einlegen des "Innenlebens" des Schalldämpfers 22 an Schweißborden 58 miteinander verschweißt. Jede Halbschale 64 ist durch Tiefziehen hergestellt. Man sieht, dass sowohl die untere Halbschale 64 als auch die obere Halbschale 64 jeweils in ihrem Bodenbereich mit Einprägungen 32 versehen sind. Die Einprägungen 32, die nach außen weisen oder nach innen weisen können, sind beim Tiefziehen geformt worden. Der Wandübergang 60 zwischen dem jeweiligen Boden 62 und dem Schweißbord 58 ist nicht mit Einprägungen 32 versehen.

## Patentansprüche

1. Abgasanlage für Verbrennungsmotoren (4), die mindestens eine der folgenden Komponenten aufweist:
- Rohrleitung (8; 12; 16; 20),
- Schalldämpfer (18; 22)
- katalytischer Abgasbehandler (10),
- Partikelfilter,
- Abgaswärmetauscher (14),
- Hitzeabschirmblech (50),
**dadurch gekennzeichnet, dass** mindestens eine der genannten Komponenten einen Blechbestandteil (50; 56) aufweist aus einem Blech (30), welches mit Einprägungen (32) aus der Blechebene heraus versehen ist, die in Draufsicht auf die Blechebene im Wesentlichen in der Form eines Sechsecks oder eines Achtecks umgrenzt sind.

2. Abgasanlage nach Anspruch 1,
**dadurch gekennzeichnet, dass** der Blechbestandteil mindestens Teil eines Schalldämpfergehäuses (56), mindestens Teil eines Gehäuses (52) des katalytischen Abgasbehandlers (10), mindestens Teil eines Partikelfiltergehäuses oder mindestens Teil eines Abgaswärmetauschergehäuses ist.

3. Abgasanlage nach Anspruch 1 oder 2,
**dadurch gekennzeichnet, dass** zum Inneren der Komponente hin weisende Einprägungen (32) vorgesehen sind.

4. Abgasanlage nach Anspruch 1 oder 2,
**dadurch gekennzeichnet, dass** vom Inneren der Komponente weg weisende Einprägungen (32) vorgesehen sind.

5. Abgasanlage nach einem der Ansprüche 1 bis 4,
**dadurch gekennzeichnet, dass** Einprägungen (32) in Form einer Wölbung vorgesehen sind.

6. Abgasanlage nach einem der Ansprüche 1 bis 4,
**dadurch gekennzeichnet, dass** Einprägungen (32) vorgesehen sind, bei denen der Boden parallel zu der Blechebene verläuft.

7. Abgasanlage nach einem der Ansprüche 1 bis 6,
**dadurch gekennzeichnet, dass** Einprägungen (32) vorgesehen sind, die im Wesentlichen in der Form eines regelmäßigen Sechsecks umgrenzt sind.

8. Abgasanlage nach einem der Ansprüche 1 bis 6,
**dadurch gekennzeichnet, dass** Einprägungen (32) vorgesehen sind, die im Wesentlichen in der Form eines Sechsecks umgrenzt sind, das im Vergleich zu einem regelmäßigen Sechseck länglich ist.

9. Abgasanlage nach einem der Ansprüche 1 bis 6,
**dadurch gekennzeichnet, dass** Einprägungen (32) vorgesehen sind, die im Wesentlichen in der Form eines regelmäßigen Achtecks umgrenzt sind.

10. Abgasanlage nach einem der Ansprüche 1 bis 6,
**dadurch gekennzeichnet, dass** Einprägungen (32) vorgesehen sind, die im Wesentlichen in der Form eines länglichen Achtecks umgrenzt sind.

11. Abgasanlage nach einem der Ansprüche 1 bis 10,
**dadurch gekennzeichnet, dass** die Einprägungen (32) so nahe beieinander positioniert sind, dass sie flächenmäßig 70 bis 100%, vorzugsweise 80 bis 100%, stärker vorzugsweise 90 bis 100%, desjenigen Flächenbereichs des Blechs (30) einnehmen, wo Einprägungen (32) vorgesehen sind.

12. Abgasanlage nach einem der Ansprüche 1 bis 11,
**dadurch gekennzeichnet, dass** die Einprägungen (32) nach Größe, Form und Positionierung derart vorgesehen sind, dass mindestens bei einem Teil der Nachbarschaftsstellen zwischen zwei benachbarten Einprägungen (32) ein uneingeprägter Steg (40) vorhanden ist.

13. Abgasanlage nach Anspruch 12,
**dadurch gekennzeichnet, dass** bei einem überwiegenden Teil der Nachbarschaftsstellen ein uneingeprägter Steg (40) vorhanden ist.

14. Abgasanlage nach Anspruch 12,
**dadurch gekennzeichnet, dass** bei allen Nachbarschaftsstellen ein uneingeprägter Steg (40) vorhanden ist.

15. Abgasanlage nach einem der Ansprüche 1 bis 14,
**dadurch gekennzeichnet, dass** die Einprägungen (32) in Reihen (34) angeordnet sind, wobei in jeder Reihe (34) die Einprägungen (32) um eine halbe Teilungsbreite (36) gegenüber den Einprägungen (32) in der Nachbarreihe versetzt sind und wobei in jeder Reihe (34) die Einprägungen (32) mit einem Teilbereich in Rücksprünge der Nachbarreihe (34) ragen.

16. Schalldämpfer (18; 22) für eine Abgasanlage (2) für Verbrennungsmotoren (4),
**dadurch gekennzeichnet, dass** sein Gehäuse (56) mindestens zum Teil aus einem Blech (30) besteht, das mit Einprägungen (32) gemäß einem der Ansprüche 1 bis 15 versehen ist.

17. Katalytischer Abgasbehandler (10) für eine Abgasanlage (2) für Verbrennungsmotoren (4),
**dadurch gekennzeichnet, dass** sein Gehäuse (52) mindestens zum Teil aus einem Blech (30) besteht, das mit Einprägungen (32) gemäß einem der Ansprüche 1 bis 15 versehen ist.

18. Partikelfilter für eine Abgasanlage (2) für Verbrennungsmotoren (4),
**dadurch gekennzeichnet, dass** sein Gehäuse mindestens zum Teil aus einem Blech (30) besteht, das mit Einprägungen (32) gemäß einem der Ansprüche 1 bis 15 versehen ist.

19. Abgaswärmetauscher (14) für eine Abgasanlage (2) für Verbrennungsmotoren (4), ,
**dadurch gekennzeichnet, dass** sein Gehäuse mindestens zum Teil aus einem Blech (30) besteht, das mit Einprägungen (32) gemäß einem der Ansprüche 1 bis 15 versehen ist.

20. Verfahren zur Herstellung einer Komponente einer Abgasanlage (2) für Verbrennungsmotoren (4),
**dadurch gekennzeichnet**,
(a) dass ein Blech (30) - vor oder nach dem Abtrennen von einem größeren Blech - mit Einprägungen (32) gemäß einem der Ansprüche 1 bis 15 versehen wird;
(b) dass - in einem eigenen Schritt oder inkorporiert in Schritt (c) - das Blech (30) so verformt wird, dass es die Form eines Blechbestandteils der Komponente hat;
(c) und dass aus diesem Blechbestandteil allein oder aus diesem Blechbestandteil zusammen mit mindestens einem weiteren Bestandteil unter Einsatz einer Fügetechnik die Komponente produziert wird.

21. Verfahren zur Herstellung einer Komponente einer Abgasanlage (2) für Verbrennungsmotoren (4),
**dadurch gekennzeichnet**,
(a) dass ein Blech (30) - vor oder nach dem Abtrennen von einem größeren Blech - so verformt wird, dass es die Form eines Blechbestandteils der Komponente hat und mit Einprägungen (32) gemäß einem der Ansprüche 1 bis 15 versehen wird;
(b) und dass aus diesem Blechbestandteil allein oder aus diesem Blechbestandteil zusammen mit mindestens einem weiteren Bestandteil unter Einsatz einer Fügetechnik die Komponente produziert wird.

## Claims

1. Exhaust apparatus for internal combustion engines (4), which includes at least one of the following components:
- pipe (8; 12; 16; 20),
- silencer (18; 22)
- catalytic exhaust-gas treatment device (10),
- particulate filter,
- exhaust-gas heat exchanger (14),
- heat shield plate (50),
**characterized in that** at least one of the abovementioned components has a sheet-metal part (50; 56) made from a metal sheet (30) which is provided with formations (32) which have been stamped out of the sheet-metal plane and, when the sheet-metal plane is seen in plan view, are substantially delimited by the shape of a hexagon or an octagon.

2. Exhaust apparatus according to Claim 1, **characterized in that** the sheet-metal part is at least part of a silencer casing (56), at least part of a casing (52) of the catalytic exhaust-gas treatment device (10), at least part of a particulate filter casing or at least part of an exhaust-gas heat exchanger casing.

3. Exhaust apparatus according to Claim 1 or 2, **characterized in that** stamped formations (32) which face towards the interior of the component are provided.

4. Exhaust apparatus according to Claim 1 or 2, **characterized in that** stamped formations (32) which face away from the interior of the component are provided.

5. Exhaust apparatus according to one of Claims 1 to 4, **characterized in that** stamped formations (32) in the form of a convexity are provided.

6. Exhaust apparatus according to one of Claims 1 to 4, **characterized in that** stamped formations (32) in which the base runs parallel to the sheet-metal plane are provided.

7. Exhaust apparatus according to one of Claims 1 to 6, **characterized in that** stamped formations (32) which are substantially delimited by the shape of a regular hexagon are provided.

8. Exhaust apparatus according to one of__Claims 1 to 6, **characterized in that** stamped formations (32) which are substantially delimited by the shape of a hexagon which is elongate compared to a regular hexagon are provided.

9. Exhaust apparatus according to one of Claims 1 to 6, **characterized in that** stamped formations (32) which are substantially delimited by the shape of a regular octagon are provided.

10. Exhaust apparatus according to one of Claims 1 to 6, **characterized in that** stamped formations (32) which are substantially delimited by the shape of an elongate octagon are provided.

11. Exhaust apparatus according to one of Claims 1 to 10, **characterized in that** the stamped formations (32) are positioned so close together that in terms of area they take up from 70 to 100%, preferably 80 to 100%, more preferably 90 to 100%, of that region of the surface of the metal sheet (30) in which stamped formations (32) are provided.

12. Exhaust apparatus according to one of Claims 1 to 11, **characterized in that** stamped formations (32), in terms of size, shape and positioning, are provided in such a manner that an unstamped web (40) is present between two adjacent stamped formations (32) at at least some of the locations where they adjoin one another.

13. Exhaust apparatus according to Claim 12, **characterized in that** an unstamped web (40) is present at the majority of the locations where the stamped formations adjoin one another.

14. Exhaust apparatus according to Claim 12, **characterized in that** an unstamped web (40) is present at all the locations where the stamped formations adjoin one another.

15. Exhaust apparatus according to one of Claims 1 to 14, **characterized in that** the stamped formations (32) are arranged in rows (34), with the stamped formations (32) in each row (34) being offset by half their pitch width (36) with respect to the stamped formations (32) in the neighbouring row, and the stamped formations (32) in each row (34) projecting by means of a partial region into set-back recesses in the neighbouring row (34) .

16. Silencer (18; 22) for an exhaust apparatus (2) for internal combustion engines (4), **characterized in that** its casing (56) at least in part comprises a metal sheet (30) which is provided with stamped formations (32) as described in one of Claims 1 to 15.

17. Catalytic exhaust-gas treatment device (10) for an exhaust apparatus (2) for internal combustion engines (4), **characterized in that** its casing (52) at least in part comprises a metal sheet (30) which is provided with stamped formations (32) as described in one of Claims 1 to 15.

18. Particulate filter for an exhaust apparatus (2) for internal combustion engines (4), **characterized in that** its casing at least in part comprises a metal sheet (30) which is provided with stamped formations (32) as described in one of Claims 1 to 15.

19. Exhaust-gas heat exchanger (14) for an exhaust apparatus (2) for internal combustion engines (4), **characterized in that** its casing is formed at least in part from a metal sheet (30) which is provided with stamped formations (32) as described in one of Claims 1 to 15.

20. Process for producing a component of an exhaust apparatus (2) for internal combustion engines (4), characterized
a) in that a metal sheet (30) - before or after it is detached from a larger metal sheet - is provided with stamped formations (32) as described in one of Claims 1 to 15;
b) in that - in a dedicated step or as part of step (c) - the metal sheet (30) is deformed in such a way that it takes on the form of a sheet-metal part of the component;
c) and in that the component is produced from this sheet-metal part alone or from this sheet-metal part together with at least one further part using a joining technique.

21. Process for producing a component of an exhaust apparatus (2) for internal combustion engines (4),
characterized
a) in that a metal sheet (30) - before or after it is detached from a larger metal sheet - is deformed in such a way that it adopts the shape of a sheet-metal part of the component and is provided with stamped formations (32) as described in one of Claims 1 to 15;
b) and in that the component is produced from this sheet-metal part alone or from this sheet-metal part together with at least one further part using a joining technique.

## Revendications

1. Système d'échappement destiné à des moteurs à combustion interne (4) et présentant au moins l'une des composantes suivantes :
- tuyauterie (8 ; 12 ; 16 ; 20),
- silencieux (18 ; 22)
- catalyseur de traitement des gaz d'échappement (10),
- filtre à particules,
- échangeur thermique pour gaz d'échappement (14),
- tôle de protection thermique (50),
**caractérisé en ce qu'**au moins l'une des composantes citées présente un élément en tôle (50 ; 56), fabriqué dans une tôle (30) qui est munie d'empreintes (32) à partir du plan de la tôle, qui en vue aérienne sur le plan de la tôle sont sensiblement délimitées sous la forme d'un hexagone ou d'un octogone.

2. Système d'échappement selon la revendication 1,
**caractérisé en ce que** l'élément en tôle est au moins une partie du boîtier d'un silencieux (56), en qu'il est au moins une partie d'un boîtier (52) du catalyseur de traitement des gaz d'échappement (10), **en ce qu'**il est au moins une partie du boîtier d'un filtre à particules ou **en ce qu'**il est au moins une partie du boîtier d'un échangeur thermique pour gaz d'échappement.

3. Système d'échappement selon l'une quelconque des revendications 1 ou 2,
**caractérisé en ce que** des empreintes (32) dirigées vers l'intérieur des composantes sont prévues.

4. Système d'échappement selon l'une quelconque des revendications 1 ou 2,
**caractérisé en ce que** des empreintes (32) partant de l'intérieur des composantes sont prévues.

5. Système d'échappement selon l'une quelconque des revendications 1 à 4,
**caractérisé en ce que** des empreintes (32) sous forme d'une cambrure sont prévues.

6. Système d'échappement selon l'une quelconque des revendications 1 à 4,
**caractérisé en ce que** des empreintes (32) sont prévues, dont le fond est parallèle au plan de la tôle.

7. Système d'échappement selon l'une quelconque des revendications 1 à 6,
**caractérisé en ce que** des empreintes (32) sensiblement délimitées sous la forme d'un hexagone régulier sont prévues.

8. Système d'échappement selon l'une quelconque des revendications 1 à 6,
**caractérisé en ce que** des empreintes (32), sensiblement délimitées sous la forme d'un hexagone qui est oblong en comparaison d'un hexagone régulier, sont prévues.

9. Système d'échappement selon l'une quelconque des revendications 1 à 6,
**caractérisé en ce que** des empreintes (32) sensiblement délimitées sous la forme d'un octogone régulier sont prévues.

10. Système d'échappement selon l'une quelconque des revendications 1 à 6,
**caractérisé en ce que** des empreintes (32) sensiblement délimitées sous la forme d'un octogone oblong sont prévues.

11. Système d'échappement selon l'une quelconque des revendications 1 à 10,
**caractérisé en ce que** les empreintes (32) sont positionnées à une telle proximité l'une par rapport à l'autre qu'elles occupent une surface de 70 à 100 %, de préférence de 80 à 100 %, de préférence encore de 90 à 100 % de la zone surfacique de la tôle (30) sur laquelle des empreintes (32) sont prévues.

12. Système d'échappement selon l'une quelconque des revendications 1 à 11,
**caractérisé en ce que**, selon leur dimension, leur forme et leur positionnement, les empreintes (32) sont prévues de façon à ce qu'une languette (40) qui n'est pas munie d'une empreinte est prévue sur au moins une partie des zones adjacentes entre deux empreintes (32) voisines.

13. Système d'échappement selon la revendication 12,
**caractérisé en ce qu'**une languette (40) qui n'est pas munie d'une empreinte est prévue sur une partie prépondérante des zones adjacentes.

14. Système d'échappement selon la revendication 12,
**caractérisé en ce qu'**une languette (40) qui n'est pas munie d'une empreinte est prévue sur toutes les zones adjacentes.

15. Système d'échappement selon l'une quelconque des revendications 1 à 14,
**caractérisé en ce que** les empreintes (32) sont disposées en rangées (34), les empreintes (32) de chaque rangée étant décalées de la moitié de la largeur d'un pas (36) par rapport aux empreintes (32) de la rangée voisine et les empreintes (32) de chaque rangée (34) saillant dans une zone partielle ménagée dans des décrochements de la rangée voisine (34).

16. Silencieux (18 ; 22) destiné à un système d'échappement (2) de moteurs à combustion interne (4),
**caractérisé en ce que** son boîtier (56) est constitué au moins partiellement d'une tôle (30) munie d'empreintes (32) selon l'une des revendications 1 à 15.

17. Catalyseur de traitement des gaz d'échappement (10) destiné à un système d'échappement (2) de moteurs à combustion interne (4),
**caractérisé en ce que** son boîtier (52) est constitué au moins partiellement d'une tôle (30) munie d'empreintes (32) selon l'une quelconque des revendications 1 à 15.

18. Filtre à particules destiné à un système d'échappement (2) de moteurs à combustion interne (4),
**caractérisé en ce que** son boîtier est constitué au moins partiellement d'une tôle (30) munie d'empreintes (32) selon l'une quelconque des revendications 1 à 15.

19. Echangeur thermique pour gaz d'échappement (14) destiné à un système d'échappement (2) de moteurs à combustion interne (4),
**caractérisé en ce que** son boîtier est constitué au moins partiellement d'une tôle (30) munie d'empreintes (32) selon l'une quelconque des revendications 1 à 15.

20. Procédé de fabrication d'une composante d'un système d'échappement (2) de moteurs à combustion interne (4), **caractérisé en ce que**
(a) (avant ou après la séparation d'une tôle plus importante), une tôle (30) est munie d'empreintes (32) selon l'une quelconque des revendications 1 à 15 ;
(b) (au cours d'une étape individuelle ou incorporée dans l'étape (c)) la tôle (30) est déformée de manière à adopter la forme d'un élément en tôle de la composante ;
(c) et **en ce que** la composante est fabriquée, à partir de ce seul élément en tôle ou à partir de cet élément en tôle en association avec au moins un élément supplémentaire, sous application d'une technique de jointage.

21. Procédé de fabrication d'une composante d'un système d'échappement (2) destiné à des moteurs à combustion interne (4), **caractérisé en ce que**
(a) (avant ou après la séparation d'une tôle plus importante), la tôle (30) est déformée de manière à adopter la forme d'un élément en tôle de la composante et à être munie d'empreintes (32) selon l'une quelconque des revendications 1 à 15 ;
(b) et **en ce que** la composante est fabriquée, à partir de ce seul élément en tôle ou à partir de cet élément en tôle en association avec au moins un élément supplémentaire, sous application d'une technique de jointage.
